# EUROPEAN PATENT APPLICATION

(11) **EP 4 814 275 A1**
(43) Date of publication of application: **30.09.2026**
(21) Application number: 25165726.8
(22) Date of filing: 24.03.2025
(51) Int. Cl.: F02C 3/107, F02C 7/36, F02K 3/06

(54) **EPICYCLIC GEARBOX, GAS TURBINE ENGINE**

(71) Applicant: Rolls-Royce Deutschland Ltd & Co KG, 15827 Blankenfelde-Mahlow (DE)
(72) Inventor: SCHWARZE, Jan, 15827 Blankenfelde-Mahlow (DE)

(57) **Abstract**

The disclosure relates to an epicyclic gearbox (100), in particular for a gas turbine engine (1000), comprising an input shaft (10), configured to receive an input rotational movement (IR) and comprising an input gear wheel (12), an output shaft (20), configured to provide an output rotational movement (OR) and comprising an output gear wheel (22), and a planetary stage (40) with at least one planetary gear wheel (42), configured to mesh with at least one of the input gear wheel (12) and the output gear wheel (22). A further output shaft (30) is proposed, configured to provide a further output rotational movement (FOR), wherein the further output shaft (30) comprises a further output gear wheel (32) configured to mesh with the at least one planetary gear wheel (42).

## Description

The present disclosure relates to epicyclic gearboxes, in particular for gas turbines. Gearboxes of such type provide a means for translating an input rotational movement, with a first speed and/or first torque, into an output rotational movement, with second speed and/or second torque. In particular, when applied in gas turbines, an epicyclic gearbox can be used for a reduction of the speed of an input rotational movement, provided e.g. by a shaft of the gas turbine, and provide an output rotational movement with reduced speed to e.g. a fan of the gas turbine.

Examples of epicyclic gearboxes can be found in US 2023/0392555 A1 and EP 3832100 A1.

There is a further need to improve epicyclic gearboxes, in particular with respect to efficiency and/or a compact design.

In accordance with the first aspect of the present disclosure, an epicyclic gearbox is proposed, in particular for a gas turbine, comprising an input shaft, configured to receive an input rotational movement and comprising an input gear wheel, an output shaft, configured to provide an output rotational movement and comprising an output gear wheel, and a planetary stage with at least one planetary gear wheel, configured to mesh with at least one of the input gear wheel and the output gear wheel.

According to the disclosure, a further output shaft is proposed, configured to provide a further output rotational movement, wherein the further output shaft comprises a further output gear wheel configured to mesh with the at least one planetary gear wheel.

The disclosure includes the finding that an additional, further output shaft can significantly enhance the utilization value of the gearbox. With the possibility to provide an - additional and different - further rotational movement, further external rotational consumers can be powered with a relatively compact gearbox. A further advantage is the possibility to achieve higher degrees of design freedom, e.g. with regards to achieving stiffness parameters and/or specific bearing arrangements.

Additional reaction forces and torque, in particular introduced by external rotational consumers connected to the further output shaft, can be deliberately used to influence the gearbox structure to cancel out forces, e.g. axial forces, and/or alleviate bending moments.

Further developments of the disclosure can be found in the dependent claims and show particularly advantageous possibilities to realize above-described concept regarding further advantages.

In a further development of the disclosure, it is proposed that the input shaft and the further output shaft are arranged at a first axial side of the epicyclic gearbox, and the output shaft is arranged at an opposing, second axial side. In particular, the axial end of each of the input and output shaft is arranged at the corresponding axial side. In other words, the input shaft is arranged such that it receives the input rotational movement at the first axial side, the further output shaft is arranged such that it provides the further rotational movement at the first axial side, and the output shaft is arranged such that it provides the output rotational movement at the second axial side. In such developments, the output shaft and the further output shaft are arranged each on a different side of the epicyclic gearbox, and rotational consumers can be distributed on both sides accordingly. This may contribute to a compact design of the gas turbine. In particular, the further output shaft may be configured to co-rotate with respect to the input shaft. This may reduce the requirements on an intershaft bearing between input shaft and further output shaft, as the relative rotational speed between both shafts may be lower. Further, the output shaft may be configured to counter-rotate with respect to the input shaft.

In a further development, it is proposed that the planetary stage comprises a first gear stage and a second gear stage, wherein the first gear stage is configured to mesh with the input gear wheel, and the second gear stage is configured to mesh with the output gear wheel and the further output gear wheel. In other words, the planetary stage may be a compound planetary stage. Each of the at least one compound gear wheel may comprise e.g. the first gear stage in a first axial section (configured to mesh with the input gear wheel) and the second gear stage in a second axial section (configured to mesh with the output gear wheel). By means of a compound planetary stage, an increased flexibility is provided for achieving a desired, in particular higher, gear ratio. The planetary stage may comprise a number of planetary gear wheels, e.g. in the range between 3 and 12, for example 4, 5, 6, 7 or 8. The output gear wheel may be configured as a ring wheel.

In a further development, the planetary stage may be stationary, and/or the at least one planetary gear wheel may be rotatably arranged on a fixed planet carrier. Such arrangement is also referred to as a star arrangement. In other developments according to the disclosure, the input gear wheel or the output gear wheel, in particular the output gear wheel configured as a ring wheel, may be stationary, resulting in a so-called planetary configuration. In again other developments, the epicyclic gearbox may be configured as a fixed center/input gear, i.e. a so-called solar arrangement.

In a further development of the disclosure, it is proposed that the first gear stage is arranged on the second axial side, and the second gear stage is arranged on the first axial side. In particular, the input shaft and the output shaft may have an axial overlap. In other words, the input gear wheel may be arranged on an axial side opposite of where the input rotational movement is received. Also, the output gear wheel may be arranged on an axial side opposite of where the output rotational movement is provided. In such a configuration, the axial arrangement of the compound stages can be considered swapped, with respect to the axial sides on which the meshing stages/shafts are connected externally. Such configuration allows for a compact design, while allowing a relatively long axial torque path, providing for increased possibilities to adjust, in particular lower, the stiffness characteristics of the gearbox.

In a further development, the first gear stage may have a first tooth number that is smaller than a second tooth number of the second gear stage. Such configuration has a speed reducing (and torque increasing) effect, i.e. resulting in the compound stage having a gear ratio greater than one.

The planetary stage and the further output gear wheel may have a gear ratio greater than or equal to one. The input gear wheel, the planetary stage and the further output gear wheel combined may have a further output gear ratio greater than or equal to 1, in particular in the range from 1 to 10, or from 1 to 5, or from 2 to 4. Such gear ratios result in a decrease of rotational speed and may be advantageous when an external rotational consumer needs to be provided with a relatively slow rotational movement, e.g. a second fan, or an additional, in particular low pressure, compressor.

In other developments, the planetary stage and the further output gear wheel may have a gear ratio smaller than or equal to one. The input gear wheel, the planetary stage and the further output gear wheel combined may have a further output gear ratio smaller than or equal to 1, in particular in the range from 0.1 to 1. Such gear ratios result in an increase of rotational speed and may be advantageous when an external rotational consumer needs to be provided with a relatively high rotational movement, e.g. an additional, in particular higher stage, compressor.

The input gear wheel, the planetary stage and the output gear wheel combined may have an output gear ratio greater than or equal to 1, in particular in the range from 1 to 10, for example in the range from 3 to 5.

In a further development, it is proposed that the input shaft and/or the output shaft and/or the further output shaft are arranged concentrically, in particular on a rotational axis.

In a development of the disclosure, it is proposed that at least two of the input gear wheel, the output gear wheel, the at least one planetary gear wheel and the further output gear wheel comprise a helical gearing. In particular all gear wheels of the input gear wheel, the output gear wheel, the at least one planetary gear wheel and the further output gear wheel may comprise a helical gearing. In combination with the additional, further output shaft, a helical gearing can further contribute to compensate axial forces. In particular, the first gear stage and the second gear stage of the planetary stage may have opposing helical angles, resulting in opposing, and at least partially compensating, axial forces. This advantageously helps to lower the axial strain, e.g. on gearbox bearings and/or shaft bearings.

In a second aspect of the disclosure, a gas turbine engine is proposed, comprising an epicyclic gearbox according to the first aspect of the disclosure.

In a development of the gas turbine engine, a fan is proposed, in particular arranged on the second axial side of the epicyclic gearbox, wherein the fan is operatively coupled, in particular fixed, to the output shaft of the epicyclic gearbox. In such configuration, the epicyclic gearbox can be used to reduce the rotational speed received at the input shaft, and provide the reduced rotational movement at the output shaft to the fan.

In a further development of the gas turbine engine, an external rotational consumer is proposed, in particular arranged on the first axial side of the epicyclic gearbox, wherein the external rotational consumer is operatively coupled, in particular fixed, to the further output shaft of the epicyclic gearbox. The expression "external" in this context in particular means "outside of the epicyclic gearbox". Nevertheless, this shall by understood in a functional way, and shall not exclude embodiments where the external rotational consumer may be arranged inside the housing of the epicyclic gearbox. Further, the external rotational consumer may well be part of the gas turbine engine. In particular, the external rotational consumer may be a further fan and/or a compressor stage of the gas turbine engine and/or an accessory of the gas turbine engine. In other developments, the external rotational consumer may be a pump and/or an electrical machine, in particular a generator, and/or an accessory gearbox. Depending on the type of external rotational consumer and its resulting requirements, the gear ratio between the input gear wheel and the further output gear wheel may be designed accordingly.

In a further, third aspect of the invention, and epicyclic gearbox, in particular for gas turbine, is proposed, comprising an input shaft, configured to receive an input rotational movement and comprising an input gear wheel, an output shaft, configured to provide an output rotational movement and comprising an output gear wheel, a planetary stage with at least one planetary gear wheel, configured to mesh with the input gear wheel and the output gear wheel, wherein the input shaft is arranged at a first axial side of the epicyclic gearbox, and the output shaft is arranged at an opposing, second axial side, and wherein the planetary stage comprises a first gear stage and a second gear stage, wherein the first gear stage is configured to mesh with the input gear wheel, and the second gear stage is configured to mesh with the output gear wheel, wherein the first gear stage is arranged on the second axial side, and the second gear stage is arranged on the first axial side.

It shall be understood that the epicyclic gearbox according to the first aspect of the disclosure, the gas turbine engine according to the second aspect of the disclosure and the epicyclic gearbox according to the third aspect of the disclosure may comprise identical or similar developments, in particular as described in the dependent claims.

Therefore, a development of one aspect of the disclosure is also applicable to another aspect of the disclosure.

These and other aspects of the disclosure will be apparent from and elucidated with reference to the embodiments described hereinafter. The embodiments of the disclosure are described in the following on the basis of the drawings. It should be borne in mind that numerous modifications and changes can be made to the form and detail of an embodiment without deviating from the general idea of the disclosure. In addition, all combinations of at least two of the features disclosed in the description, drawings and/or claims fall within the scope of the disclosure. The general idea of the disclosure is not limited to the exact form or detail of the embodiments shown and described below, or to an object which would be limited in comparison to the object claimed in the claims. For specified design ranges, values within the specified limits are also disclosed as limit values and thus arbitrarily applicable and claimable.

Further advantages, features and details of the disclosure result from the following description of the preferred embodiments as well as from the drawings, which show in:
- Fig. 1: a schematic cross-sectional drawing of an epicyclic gearbox,
- Fig. 2: a schematic cross-sectional drawing of a first embodiment of the disclosure comprising an epicyclic gearbox,
- Fig. 3: a schematic cross-sectional drawing of a gas turbine engine,
- Fig. 4: a schematic cross-sectional drawing of a second embodiment of the disclosure comprising gas turbine engine.

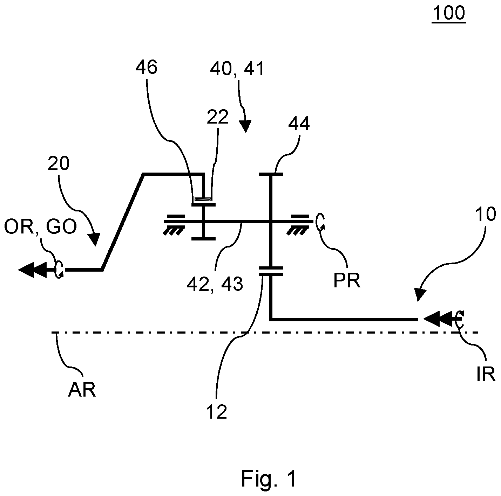

Fig. 1 shows a schematic drawing of an epicyclic gearbox 100. The epicyclic gearbox 100 comprises an input shaft 10, configured to receive an input rotational movement IR, and an output shaft 20, configured to provide an output rotational movement OR. The input shaft 10 comprises an input gear wheel 12. The output shaft 20 comprises an output gear wheel 22, which is configured as a ring gear. The input shaft 10 and the output shaft 20 are arranged rotatably with respect to a rotational axis AR. Further, a planetary stage 40, comprising a plurality of planetary gear wheels 42 (one of which is shown here), is arranged axially and radially between the input shaft 10 and a ring section of the output shaft 20. The planetary stage 40 is configured as a compound planetary stage 41. Accordingly, the at least one planetary gear wheel 42 is configured as a compound planetary gear wheel 43, comprising a first gear stage 44, which is arranged and configured to mesh with the input gear wheel 12, and a second gear stage 46, which is arranged and configured to mesh with the output gear wheel 22. The planetary stage 40 is counter-rotating with respect to the input shaft 10. In other words, the input rotational movement IR is opposing a planetary rotational movement PR of the planetary stage 40. The output shaft 20 is counter-rotating with respect to the input shaft 10. In other words, the input rotational movement IR and the output rotational movement OR are of opposing rotation directions.

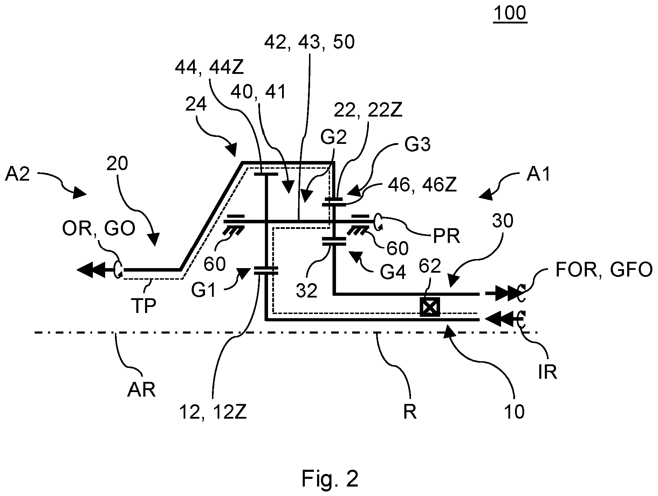

Fig. 2 shows a first embodiment of an epicyclic gearbox 100 according to the concept of the present disclosure. An input shaft 10 with an input gear wheel 12 is arranged rotatably with respect to a rotational axis AR. The input gear wheel 12 is meshing with a planetary stage 40, here in the form of a compound planetary stage 41. The planetary stage 40 again is meshing with an output gear wheel 22 of an output shaft 20. The output shaft 20 is arranged and configured to rotate around the rotational axis AR, and to provide an output rotational movement OR at a second axial side A2, opposite of the first axial side A1. The planetary stage 40 comprises a plurality of planetary gear wheels 42, one of which is visible here, which are accordingly configured as compound planetary gear wheels 43.

The input shaft 10 is arranged and configured to receive an input rotational movement IR, which e.g. may be provided by a turbine shaft of a gas turbine (not shown here), at a first axial side A1. In embodiments, the input shaft 10 may be a shaft of the gas turbine. Through a meshing between the input gear wheel 12 and a first gear stage 44 of the compound planetary gear wheel 43, the planetary gear wheel 43 is rotating with a planetary rotational movement PR, which is opposing the input rotational movement IR.

A first gear ratio G1 is a function (ratio) of an input tooth number 12Z of the input gear wheel 12, and a first tooth number 44Z of the first planetary gear stage 44. The first planetary gear stage 44 is rigidly connected to a second planetary gear stage 46 of the compound planetary gear wheel 43, wherein the second gear stage 46 comprises a second tooth number 46Z, which is different from, in particular smaller than, the first tooth number 44Z. The planetary stage 40 is defined by a second gear ratio G2 as a function of the first tooth number 44Z and the second tooth number 46Z. The second gear stage 46 meshes with the output gear wheel 20, realizing a third gear ratio G3 as a function of the second tooth number 46Z and an output tooth number 22Z of the output gear wheel 22. A resulting output rotational movement OR is co-rotating with respect to the planetary rotational movement PR, but counter-rotating with respect to the input rotational movement IR.

Further, according to the concept of the disclosure, a further output shaft 30 is arranged concentrically with respect to the input shaft 10 and the rotational axis AR, radially surrounding said input shaft 10. An intershaft bearing 62 is arranged radially between the input shaft 10 and the further output shaft 30. The further output shaft 30 comprises a further output gear wheel 32, which is configured and arranged to mesh with the second planetary gear stage 44, resulting in a fourth gear ratio G4 is a function of the second tooth number 46Z and a further output tooth number 32Z of the further output gear wheel 32. The further output shaft 30 is configured to provide a further output rotational movement FOR, which is co-rotating with respect to the input rotational movement IR, but counter-rotating with respect to the planetary rotational movement PR. An output gear ratio GO is defined as the product of first gear ratio G1 and second gear ratio G2 and third gear ratio G3. The further output gear ratio GFO is defined as the product of first gear ratio G1, second gear ratio G2 and fourth gear ratio G4.

The planetary gear wheel 42, in particular the first planetary gear stage 44 and the second planetary gear stage 46, are configured with a helical gearing 50. Accordingly, also the meshing input gear wheel 12, output gear wheel 22 and further output gear wheel 32 are configured with a corresponding helical gearing 50.

The transmission of torque between the input shaft 10 and the output shaft 22 in the form of a torque path TP, is exemplarily shown in Fig. 2 by means of a dashed line. The swapped axial order of the first planetary gear stage 44 and the second planetary gear stage 46 (or in other words: the reverse axial order of input gear wheel 12 and output gear wheel 22) results in an axial overlap of the input shaft 10 and the output shaft 20. The torque path TP accordingly meanders back and forth in the axial direction, namely starting from the input shaft: towards the second axial side A2, then back towards the first axial side A1, and subsequently, back to the second axial side A2. Such swap of axial planetary planes results in an extended torque path (greater than the actual axial extension of the epicyclic gearbox) and can contribute to reduce the torsional stiffness of the epicyclic gearbox 100, whilst having a relatively small axial dimension.

The embodiment shown is a star arrangement, in particular a compound star arrangement, with the planetary gear wheels 42 being rotatably mounted by stationary bearings 60. The bearings 60 may be roller bearings, as it is the case in this embodiment. In other embodiments, the bearings 60 may be journal bearings. The bearings 60 are fixed to a casing of the epicyclic gearbox 100, and consequently, e.g. via intermediate structures (not shown here), to a stationary structure of the gas turbine engine 1000.

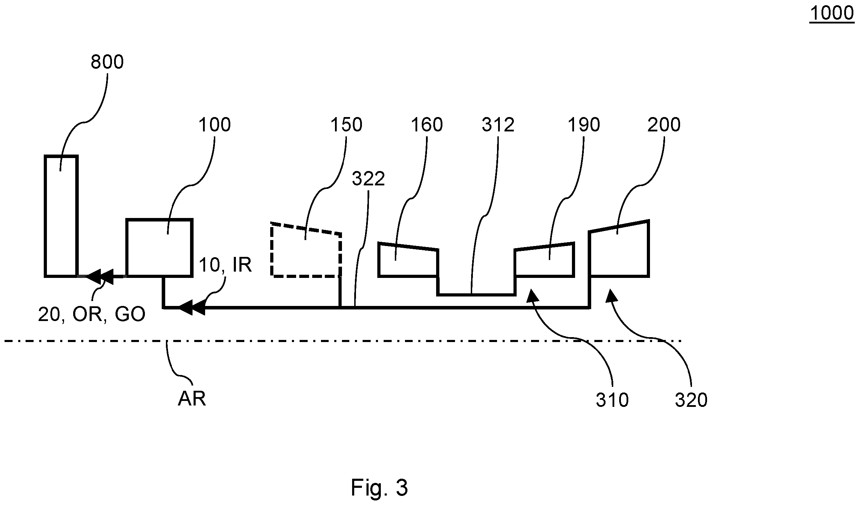

Fig. 3 shows a schematic drawing of a gas turbine engine 1000, comprising a high-pressure stage 310 and a low-pressure stage 320, both arranged concentrically around a rotational axis AR. The high-pressure stage 310 comprises a high-pressure compressor 160, coupled to a high-pressure turbine 190 via a high-pressure shaft 312. The low-pressure stage 320 comprises a low-pressure compressor 150, coupled to a low-pressure turbine 200 via a low-pressure shaft 322. Other gas turbine engines 1000 may have additional stages or components or less stages or components, for example may lack the low-pressure compressor 150, which is indicated by the dashed symbol in Fig. 3. The low-pressure shaft 322 is further coupled to an epicyclic gearbox 100, e.g. a gearbox described in Fig. 1 or Fig. 2, in order to provide an input rotational movement IR to the epicyclic gearbox 100. The low-pressure shaft 322 (or in other embodiments, any other torque-providing shaft of the gas turbine engine 1000, such as an intermediate pressure shaft) is coupled to an input shaft 10 of the epicyclic gearbox. In again other embodiments, the input shaft 10 and the low-pressure shaft 322 may be the same component. The epicyclic gearbox 100 translates the input rotational movement IR into an output rotational movement OR according to an output gear ratio GO, and provides said output rotational movement OR to a fan 800, which is coupled to an output shaft 20 of the epicyclic gearbox 100.

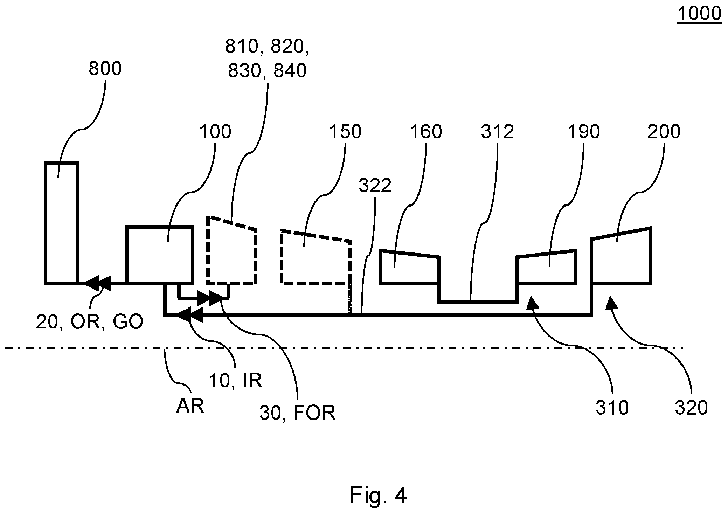

Fig. 4 shows a schematic drawing of a further embodiment of a gas turbine engine 1000. Compared to the previous embodiment shown in Fig. 3, the present embodiment further comprises an external rotational consumer 810, which is rotatably coupled to a further output shaft 30 of the epicyclic gearbox 100, to receive a further output rotational movement FOR from the epicyclic gearbox 100. The epicyclic gearbox 100 therefore is configured as shown in Fig. 2. In the present example, the external rotational consumer 810 is a further fan 820. The further fan 820 may be counter-rotating with respect to the fan 800, as it is the case here. In other embodiments, the external rotational consumer 810 may be different, e. g. a compressor stage 830 or an accessory 840, such as a pump and/or an electrical machine and/or a starter. In again other embodiments, a plurality of external rotational consumers, and/or a combination the ones listed before, may be coupled to the further output shaft 30.

**List of reference signs (part of the description)**

| | |
|---|---|
| 10 | input shaft |
| 12 | input gear wheel |
| 12Z | input tooth number |
| 20 | output shaft |
| 22 | output gear wheel |
| 22Z | output tooth number |
| 24 | ring section of output shaft |
| 30 | further output shaft |
| 32 | further output gear wheel |
| 32Z | further output tooth number |
| 40 | planetary stage |
| 41 | compound planetary stage |
| 42 | planetary gear wheel |
| 43 | compound planetary gear wheel |
| 44 | first gear stage of the planetary stage, first planetary gear stage |
| 44Z | first tooth number, tooth number of the first gear stage |
| 46 | second gear stage of the planetary stage, second planetary gear stage |
| 46Z | second tooth number, tooth number of the second gear stage |
| 50 | helical gearing |
| 60 | bearing |
| 62 | intershaft bearing |
| 100 | epicyclic gearbox |
| 150 | low-pressure compressor |
| 160 | high-pressure compressor |
| 190 | high-pressure turbine |
| 200 | low-pressure turbine |
| 310 | a high-pressure stage |
| 312 | high-pressure shaft |
| 320 | low-pressure stage |
| 322 | low-pressure shaft |
| 800 | fan |
| 810 | external rotational consumer |
| 820 | further fan |
| 830 | compressor stage |
| 840 | accessory |
| 1000 | gas turbine engine |
| A1 | first axial side |
| A2 | second axial side |
| AR | rotational axis |
| FOR | further output rotational movement |
| G1-G4 | 1^{st} to 4^{th} gear ratio |
| GFO | further output gear ratio |
| GO | output gear ratio |
| IR | input rotational movement |
| OR | output rotational movement |
| PR | planetary rotational movement |
| TP | torque path |

## Claims

1. Epicyclic gearbox (100), in particular for a gas turbine engine (1000), comprising:
- an input shaft (10), configured to receive an input rotational movement (IR) and comprising an input gear wheel (12),
- an output shaft (20), configured to provide an output rotational movement (OR) and comprising an output gear wheel (22),
- a planetary stage (40) with at least one planetary gear wheel (42), configured to mesh with at least one of the input gear wheel (12) and the output gear wheel (22),
**characterized by**
- a further output shaft (30), configured to provide a further output rotational movement (FOR), wherein
- the further output shaft (30) comprises a further output gear wheel (32) configured to mesh with the at least one planetary gear wheel (42).

2. Epicyclic gearbox (100) according to claim 1, **characterized in that** the input shaft (10) and the further output shaft (30) are arranged at a first axial side (A1) of the epicyclic gearbox (100), and the output shaft (20) is arranged at an opposing, second axial side (A2).

3. Epicyclic gearbox (100) according to claim 1 or 2, **characterized in that** the planetary stage (40) comprises a first gear stage (44) and a second gear stage (46), wherein
- the first gear stage (44) is configured to mesh with the input gear wheel (12), and
- the second gear stage (46) is configured to mesh with the output gear wheel (22) and the further output gear wheel (32).

4. Epicyclic gearbox (100) according to claim 3, depending from claim 2, **characterized in that** the first gear stage (44) is arranged on the second axial side (A2), and the second gear stage (46) is arranged on the first axial side (A1).

5. Epicyclic gearbox (100) according to claim 3 or 4, **characterized in that** the first gear stage (44) has a first tooth number (44Z) that is smaller than a second tooth number (46Z) of the second gear stage (46).

6. Epicyclic gearbox (100) according to one of the preceding claims, **characterized in that** the input shaft (10) and/or the output shaft (20) and/or the further output shaft (30) are arranged concentrically, in particular on a rotational axis (R).

7. Epicyclic gearbox (100) according to one of the preceding claims, **characterized in that** at least two of the input gear wheel (12), the output gear wheel (22), the planetary gear wheel (42) and the further output gear wheel (32) comprise a helical gearing (50).

8. Gas turbine engine (1000), comprising an epicyclic gearbox (100) according to one of the preceding claims.

9. Gas turbine engine (1000) according to claim 8, **characterized by** a fan (800), in particular arranged on the second axial side (A2) of the epicyclic gearbox (100), wherein the fan (800) is operatively coupled, in particular fixed, to the output shaft (20) of the epicyclic gearbox (100).

10. Gas turbine engine (1000) according to claim 8 or 9, **characterized by** an external rotational consumer (810), in particular arranged on the first axial side (A1) of the epicyclic gearbox (100), wherein the external rotational consumer (810) is operatively coupled, in particular fixed, to the further output shaft (30) of the epicyclic gearbox (100).

11. Gas turbine engine (1000) according to claim 10, **characterized in that** the external rotational consumer (810) is a further fan (820), a compressor stage (830) of the gas turbine engine (1000) or an accessory (840) of the gas turbine engine (1000).
